(19) Europäisches Patentamt
European Patent Office
Office européen des brevets

(11) **EP 2 135 140 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(51) Int Cl.:
***G05B 13/02*** *(2006.01)*

(21) Anmeldenummer: **08735840.4**

(22) Anmeldetag: **04.04.2008**

(86) Internationale Anmeldenummer:
**PCT/EP2008/054099**

(87) Internationale Veröffentlichungsnummer:
**WO 2008/125522 (23.10.2008 Gazette 2008/43)**

(54) **VERFAHREN ZUR RECHNERGESTÜTZTEN STEUERUNG UND/ODER REGELUNG EINES TECHNISCHEN SYSTEMS**

METHOD FOR COMPUTER-SUPPORTED CONTROL AND/OR REGULATION OF A TECHNICAL SYSTEM

PROCÉDÉ DE COMMANDE ET/OU DE RÉGLAGE ASSISTÉ PAR ORDINATEUR D'UN SYSTÈME TECHNIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.04.2007 DE 102007017259**

(43) Veröffentlichungstag der Anmeldung:
**23.12.2009 Patentblatt 2009/52**

(73) Patentinhaber: **Siemens Aktiengesellschaft**
**80333 München (DE)**

(72) Erfinder:
• **SCHNEEGASS, Daniel**
**1019 HM Amsterdam (NL)**
• **UDLUFT, Steffen**
**82223 Eichenau (DE)**

(56) Entgegenhaltungen:
• **G. SCOTT ET AL: "Refining PID Controllers Using Neural Networks" NEURAL COMPUTATION, Nr. 4, 1992, Seiten 746-757, XP002489324**
• **KALOGIROU S A: "Artificial intelligence for the modeling and control of combustion processes: a review" PROGRESS IN ENERGY AND COMBUSTION SCIENCE, ELSEVIER SCIENCE PUBLISHERS, AMSTERDAM, NL, Bd. 29, Nr. 6, 1. Januar 2003 (2003-01-01), Seiten 515-566, XP004470707 ISSN: 0360-1285**
• **KUMPATI S NARENDRA ET AL: "Adaptive Control Using Multiple Models" IEEE TRANSACTIONS ON AUTOMATIC CONTROL, IEEE SERVICE CENTER, LOS ALAMITOS, CA, US, Bd. 42, Nr. 2, 1. Februar 1997 (1997-02-01), XP011000311 ISSN: 0018-9286**
• **KARSTEN BERNS, THORSTEN KOLB: "Neurale Netze für technische Anwendungen" 1994, SPRINGER , BERLIN , XP002489325 Seite 82 - Seite 91**
• **ANDREAS ZELL: "Simulation Neuraler Netze" 1994, ADDISON-WESLEY , BONN , XP002489326 Seite 71 - Seite 86 Seite 97 - Seite 103 Seite 105 - Seite 114**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur rechnergestützten Steuerung und/oder Regelung eines technischen Systems und ein entsprechendes Computerprogrammprodukt.

Bei der Steuerung von komplexen technischen Systemen ist es oftmals wünschenswert, dass die am technischen System durchzuführenden Aktionen derart gewählt sind, dass ein vorteilhaftes gewünschtes dynamisches Verhalten des technischen Systems erhalten wird. Das dynamische Verhalten kann jedoch bei komplexen technischen Systemen oftmals nicht einfach vorhergesagt werden, so dass entsprechende rechnergestützte Vorhersageverfahren benötigt werden, um das zukünftige Verhalten des technischen Systems abzuschätzen und dementsprechend geeignete Aktionen zur Regelung bzw. Steuerung des technischen Systems zu wählen.

Heutzutage beruht die Steuerung von technischen Systemen oftmals auf Expertenwissen, d.h. die automatische Regelung des Systems wird auf der Basis dieses Expertenwissens erstellt. Es sind jedoch auch Ansätze bekannt, bei denen mit Hilfe von bekannten Methoden des sog. bestärkenden Lernens technische Systeme gesteuert werden. Die bekannten Verfahren sind jedoch nicht allgemein auf beliebige technische Systeme anwendbar und liefern oftmals keine ausreichend guten Ergebnisse.

In dem Dokument G. Scott et al., "Refining PID Controllers Using Neural Networks", Neural Computation, Nr. 4, 1992, Seiten 746-757, wird die Steuerung eines technischen Systems basierend auf einer Modellierung des technischen Systems mit neuronalen Netzen beschrieben, welche mit einem Error-Backpropagation-Verfahren gelernt werden.

In dem Dokument Kalogirou S. A., "Artificial intelligence for the modeling and control of combustion processes: a review", Progress in Energy and Combustion Science, Elsevier Science Publishers, Amsterdam, NL, Bd. 29, Nr. 6, 1. Januar 2003, Seiten 515-566, wird die Verwendung von neuronalen Netzen zur Modellierung und Steuerung von technischen Systemen in der Form von Verbrennungssystemen erläutert.

Das Dokument Kumpati S. Narendra et al., "Adaptive Control Using Multiple Models", IEEE Transactions on Automatic Control, IEEE Service Center, Los Alamitos, CA, US, Bd. 42, Nr. 2, 1. Februar 1997, offenbart die adaptive Steuerung einer technischen Anlage basierend auf einer Vielzahl von Modellen, wobei jedes Modell einer unterschiedlichen Umgebung entspricht, in der die technische Anlage arbeitet. Basierend auf der Vielzahl von Modellen wird dann eine geeignete Steuerung für die technische Anlage ausgewählt.

Aufgabe der Erfindung ist es deshalb, ein Verfahren zur rechnergestützten Steuerung und/oder Regelung eines technischen Systems zu schaffen, welches allgemeingültig auf beliebige technische Systeme anwendbar ist und gute Ergebnisse liefert.

In dem erfindungsgemäßen Verfahren wird das dynamische Verhalten eines technischen Systems für mehrere Zeitpunkte betrachtet, wobei das dynamische Verhalten für jeden Zeitpunkt durch einen Zustand des technischen Systems und eine am technischen System durchgeführte Aktion charakterisiert wird, wobei eine jeweilige Aktion zu einem jeweiligen Zeitpunkt in einen Folgezustand des technischen Systems zum nächsten Zeitpunkt führt.

Um eine optimale Steuerung bzw. Regelung des technischen Systems zu erreichen, wird eine Aktionsauswahlregel auf der Basis von Datensätzen gelernt, wobei jeder Datensatz den Zustand des technischen Systems zu einem jeweiligen Zeitpunkt, die in dem Zeitpunkt durchgeführte Aktion sowie den Folgezustand umfasst und wobei jedem Datensatz eine Bewertung zugeordnet ist.

Ein Zustand des technischen Systems ist hierbei insbesondere ein Zustandsvektor mit einer oder mehreren Variablen, wobei die Variablen beispielsweise beobachtete Zustandsgrößen des technischen Systems sind. Analog kann auch eine am technischen System durchzuführende Aktion durch einen entsprechenden Vektor mit einer Mehrzahl von Aktionsvariablen bestehen, wobei die Aktionsvariablen insbesondere einstellbare Parameter am technischen System repräsentieren.

Das erfindungsgemäße Verfahren zeichnet sich durch eine spezielle Variante des Lernens der Aktionsauswahlregel aus, welche folgende Schritte umfasst:

i) Modellieren einer Qualitätsfunktion durch ein oder mehrere neuronale Netze umfassend die Zustände und Aktionen des technischen Systems als Parameter;

ii) Lernen des oder der neuronale Netze auf der Basis eines Optimalitätskriteriums, welches von den Bewertungen der Datensätze und der Qualitätsfunktion abhängt.

Mit einem derartigen Verfahren wird durch geeignetes Lernen der neuronalen Netze auf einfache und effektive Weise eine optimale Aktionsauswahlregel ermittelt, welche von den Bewertungen der Datensätze abhängt, wobei die Aktionsauswahlregel derart ausgestaltet ist, dass in einem Zustand immer möglichst die Aktion mit der besten Bewertung ausgewählt wird. Mit der gelernten Aktionsauswahlregel erfolgt dann die eigentliche Regelung bzw. Steuerung des technischen Systems dadurch, dass am technischen System durchzuführende Aktionen mit der gelernten Aktionswahlregelung basierend auf dem oder den gelernten neuronalen Netzen ausgewählt werden. Das erfindungsgemäße Verfahren wurde anhand von Testdatensätzen überprüft und es hat sich gezeigt, dass mit dem Verfahren sehr gute Ergebnisse erzielt werden.

In einer bevorzugten Ausführungsform des erfindungsgemäßen Verfahrens wird die Qualitätsfunktion durch das oder die neuronalen Netze derart modelliert, dass eine Bewertungsfunktion an die Bewertungen der Datensätze angepasst wird.

Bei der Steuerung bzw. Regelung des technischen Systems mit der gelernten Aktionsauswahlregel wird in einer bevorzugten Variante der Erfindung vorzugsweise diejenige Aktion in einem jeweiligen Zustand ausgewählt, für welche durch das oder die gelernten neuronalen Netze der höchste Wert der Qualitätsfunktion erzeugt wird.

In einer besonders bevorzugten Ausführungsform des erfindungsgemäßen Verfahrens wird die Qualitätsfunktion mit einer Mehrzahl von neuronalen Netzen modelliert, wobei jedes Netz der Mehrzahl von neuronalen Netzen ein Feed-Forward-Netz ist, welches folgende Schichten umfasst:

- eine Eingangsschicht umfassend einen jeweiligen Zustand des technischen Systems;
- eine oder mehrere versteckte Schichten mit versteckten Variablen;
- eine Ausgangsschicht umfassend die Qualitätsfunktion.

Jedes der Netze der Mehrzahl von neuronalen Netzen parametrisiert hierbei eine in dem jeweiligen Zustand mögliche durchzuführende Aktion.

Anstatt der Verwendung einer Mehrzahl von neuronalen Netzen zur Modellierung der Qualitätsfunktion ist es in einer Variante der Erfindung auch möglich, dass die Qualitätsfunktion durch ein einziges neuronales Netz modelliert wird, wobei das neuronale Netz wiederum ein Feed-Forward-Netz ist, welches folgende Schichten umfasst:

- eine Eingangsschicht umfassend einen jeweiligen Zustand des technischen Systems und die in dem jeweiligen Zustand durchführbare Aktion;
- eine oder mehrere versteckte Schichten mit versteckten Variablen;
- eine Ausgangsschicht umfassend die Qualitätsfunktion.

Bei der Verwendung eines einzigen neuronalen Netzes stellt somit auch die Aktion selbst eine Variable der Eingangsschicht dar, und es ist nicht mehr erforderlich, eine Vielzahl von Feed-Forward-Netzen für jeden möglichen Aktionswert zu generieren. Die oben genannten Feed-Forward-Netze werden auch als Mehrschicht-Perzeptronen bezeichnet und sind hinlänglich aus dem Stand der Technik bekannte Strukturen von künstlichen neuronalen Netzen.

Zum Lernen des oder der neuronalen Netze in dem erfindungsgemäßen Verfahren wird vorzugsweise das hinlänglich aus dem Stand der Technik bekannte Backpropagation-Verfahren eingesetzt.

Das Optimalitätskriterium kann in dem erfindungsgemäßen Verfahren verschieden gewählt werden, wobei vorzugsweise dasjenige Optimalitätskriterium verwendet wird, das ein optimales dynamisches Verhalten des technischen Systems parametrisiert. Mögliche Optimalitätskriterien sind beispielsweise die Minimierung des Bellman-Residuum bzw. das Erreichen des Fixpunktes der Bellman-Iteration. Das Bellman-Residuum bzw. die Bellman-Iteration sind dem Fachmann auf dem Gebiet des bestärkenden Lernens (englisch Reinforcement Learning) bekannt und werden deshalb an dieser Stelle nicht mehr erläutert. In der detaillierten Beschreibung findet sich jedoch explizit die mathematische Definition dieser beiden Optimalitätskriterien.

In einer besonders bevorzugten Ausführungsform des erfindungsgemäßen Verfahrens umfasst das Optimalitätskriterium einen einstellbaren Parameter, durch dessen Veränderung das Optimalitätskriterium angepasst wird. Hierdurch wird eine flexible Möglichkeit geschaffen, das erfindungsgemäße Verfahren auf das für den vorgegebenen Datensatz am besten geeignete Optimalitätskriterium anzupassen.

In einer weiteren Ausführungsform des erfindungsgemäßen Verfahrens kann auch die Historie von vergangenen Zuständen und Aktionen des technischen Systems in geeigneter Weise berücksichtigt werden. Dies erfolgt dadurch, dass die Zustände in den Datensätzen versteckte Zustände des technischen Systems sind, welche durch ein rekurrentes neuronales Netz mit Hilfe von Ursprungsdatensätzen generiert werden, wobei die Ursprungsdatensätze jeweils einen beobachteten Zustand des technischen Systems, eine in dem beobachteten Zustand durchgeführte Aktion sowie den daraus resultierenden Folgezustand umfassen. Mit dem rekurrenten neuronalen Netz wird insbesondere das dynamische Verhalten des technischen Systems modelliert, wobei das rekurrente neuronale Netz gebildet ist durch wenigstens eine Eingangsschicht umfassend die beobachteten Zustände des technischen Systems und die am technischen System durchgeführten Aktionen, wenigstens eine versteckte rekurrente Schicht umfassend die versteckten Zustände des technischen Systems und wenigstens eine Ausgangsschicht umfassend die beobachteten Zustände des technischen Systems. Das rekurrente neuronale Netz wird wiederum mit einem geeigneten Lernverfahren gelernt, insbesondere auch mit dem bekannten Backpropagation-Verfahren.

Mit dem erfindungsgemäßen Verfahren können beliebige technische Systeme gesteuert und geregelt werden, ein bevorzugter Anwendungsbereich sind jedoch Turbinen, insbesondere Gasturbinen. Bei der Steuerung bzw. Regelung einer Gasturbine sind die Zustände des technischen Systems und/oder die in den jeweiligen Zuständen durchführbaren Aktionen eine oder mehrere der folgenden Größen:

Gesamtleistung der Gasturbine; ein oder mehrere Drucke und/oder Temperaturen in der Gasturbine oder in der Umgebung der Gasturbine; Brennkammerbeschleunigungen in der Gasturbine; ein oder mehrere Einstellparameter in der Gasturbine, insbesondere Ventileinstellungen und/oder Kraftstoffverhältnisse und/oder Vorleitschaufelstellungen.

Neben dem oben beschriebenen Verfahren betrifft die Erfindung ferner ein Computerprogrammprodukt mit einem auf einem maschinenlesbaren Träger gespeicherten Programmcode zur Durchführung des erfindungsgemäßen Verfahrens, wenn das Programm auf einem Rechner abläuft.
Ausführungsbeispiele der Erfindung werden nachfolgend anhand der beigefügten Figuren detailliert beschrieben.
Es zeigen:

Fig. 1    eine schematische Darstellung einer ersten Ausführungsform des erfindungsgemäßen Verfahrens; und

Fig. 2    eine schematische Darstellung einer zweiten Ausführungsform des erfindungsgemäßen Verfahrens.

Die nachfolgend beschriebenen Ausführungsformen des erfindungsgemäßen Verfahrens beruhen auf einer Menge von Datensätzen, welche für ein beliebiges technisches System beobachtet, d.h. gemessen bzw. experimentell ermittelt wurden. Ein besonders bevorzugter Anwendungsfall eines technischen Systems ist dabei die Steuerung einer Gasturbine, für die Daten in der Form von Zustandsgrößen der Turbine vorliegen, beispielsweise die Gesamtleistung der Gasturbine, ein oder mehrere Drucke und/oder Temperaturen in der Gasturbine, Brennkammerbeschleunigungen und dergleichen. Es liegen hierbei Datensätze zu einer Vielzahl von aufeinanderfolgenden Zeitpunkten vor, wobei jeder Datensatz charakterisiert ist durch einen Zustand, der üblicherweise ein Zustandsvektor mit einer Mehrzahl von Zustandsgrößen ist, durch eine Aktion, welche die Veränderung von Zustandsgrößen oder anderen einstellbaren Parametern des technischen Systems repräsentiert, sowie durch einen Folgezustand, der die Werte der Zustandsgrößen nach Durchführung der Aktion wiedergibt. Darüber hinaus liegt für jeden Datensatz eine Bewertung bzw. Belohnung vor, welche die Güte der Aktion zum jeweiligen Zeitpunkt für die Steuerung des technischen Systems wiedergibt. Die Bewertung ist hierbei vorzugsweise derart ausgestaltet, dass die beste bzw. optimale Steuerung des technischen Systems durch Aktionen mit hohen Bewertungen bzw. Belohnungen zu den verschiedenen Zeitpunkten während des Betriebs des technischen Systems erreicht wird.
In den nachfolgend beschriebenen Ausführungsformen des erfindungsgemäßen Verfahrens wird nunmehr anhand der beobachteten Datensätze des technischen Systems mit einem bestärkenden Lernverfahren (englisch Reinforcement Learning) eine Aktionsauswahlregel gelernt, mit der anschließend das technische System in geeigneter Weise betrieben werden kann. Die Aktionsauswahlregel gibt dabei für einen Zustand des technischen Systems an, welches die beste, in diesem Zustand durchzuführende Aktion ist. Das technische System wird hierbei als ein stochastisches dynamisches System betrachtet, wobei das bestärkende Lernverfahren zur Ermittlung der Aktionsauswahlregel als eine Regressionsaufgabe betrachtet wird, bei der eine Belohnungsfunktion an die beobachteten Datensätze angepasst wird.
In dem nachfolgend beschriebenen Lernverfahren wird nach der Aktionsauswahlregel gesucht, welche optimal zur Steuerung des technischen Systems eingesetzt werden kann. Mathematisch werden hierbei die Zustände, die Aktionen und die Folgezustände als ein sog. Markov-Entscheidungsprozess betrachtet. Ein Markov-Entscheidungsprozess ist allgemein gegeben durch einen Zustandsraum S, einen Satz von Aktionen A, die in den unterschiedlichen Zuständen ausgewählt werden können, und der Dynamik, welche als Übergangs-Wahrscheinlichkeits-Verteilung $P_T$ : $S \times A \times S \to [0,1]$ betrachtet wird, die von dem momentanen Zustand s, der gewählten Aktion a und dem Folgezustand s' abhängt. Der Übergang von einem Zustand zum Folgezustand wird durch sog. Belohnungen R(s,a,s') charakterisiert, welche Funktionen des momentanen Zustands, der Aktion und des Folgezustands sind. Die Belohnungen werden durch eine Belohnungs-Wahrscheinlichkeits-Verteilung $P_R$ mit dem Erwartungswert der Belohnung $\mathbf{E}R = \int_R r P_R(s,a,s',r) dr, s, s' \in S, a \in A$ definiert.
Gemäß der nachfolgend beschriebenen Ausführungsform des erfindungsgemäßen Verfahrens wird nach dem Maximum einer diskontierenden Q-Funktion gesucht, welche der Qualitätsfunktion im Sinne der Ansprüche entspricht und durch die hinlänglich aus dem Stand der Technik bekannte Bellman-Gleichung wie folgt definiert ist:

$$Q^{\pi}(s,a) = \mathbf{E}_{s'}\left(R(s,a,s') + \gamma Q^{\pi}(s',\pi(s'))\right) \qquad (1).$$

Die Maximierung erfolgt hierbei im sog. Regelraum $\Pi=(S{\to}A)$ über alle möglichen Zustände s und Aktionen a, wobei $0 < \gamma < 1$ der Diskontierungsfaktor ist, s' der Folgezustand von s ist und $\pi \in \Pi$ die verwendete Aktionsauswahlregel ist. Die optimale Aktionsauswahlregel ist diejenige, welche Aktionen verwendet, welche die (beste) Q-Funktion maximieren, wobei die beste Q-Funktion durch folgende Gleichung gegeben ist:

$$Q^{\pi_{opt}}(s,a) = Q(s,a) = \mathbf{E}_{s'}\left(R(s,a,s') + \gamma \max_{a'} Q(s',a')\right) \qquad (2).$$

Die ist gleichbedeutend mit der Suche nach folgender Aktionsauswahlregel:

$$\pi(s) = \arg\max_{a} Q(s,a) \qquad (3).$$

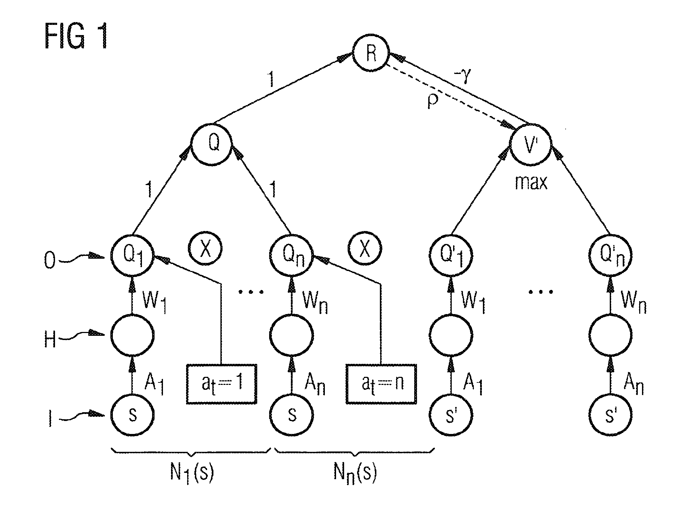

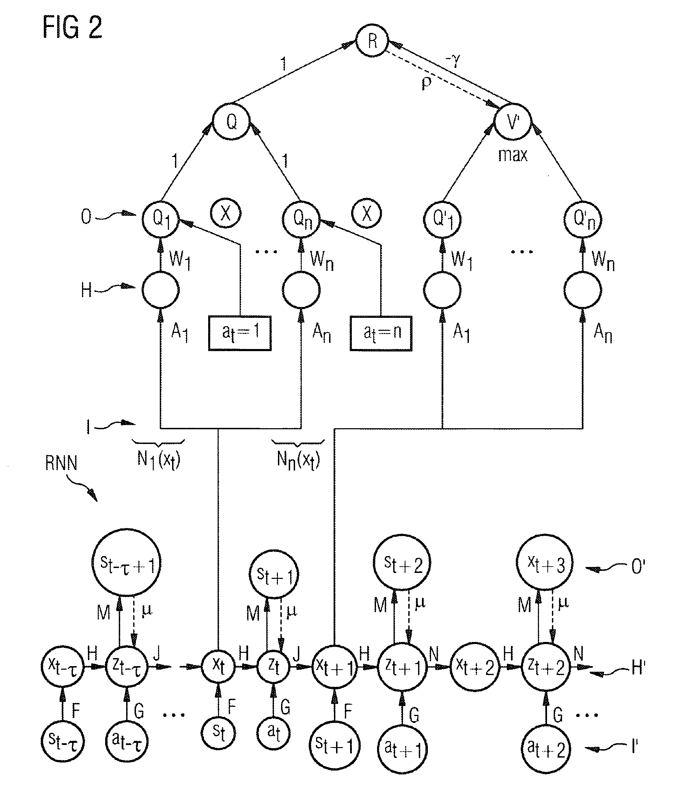

Für die nachfolgende Beschreibung wird ferner die sog. Wertefunktion über S als $V(s)=\max_a Q(s,a)$ definiert.
In den nachfolgend beschriebenen Ausführungsformen des erfindungsgemäßen Verfahrens wird ein technisches System betrachtet, bei dem die Zustände des Systems kontinuierlich sind und ein diskreter Satz von in einem jeweiligen Zustand durchführbaren Aktionen vorliegt. Die Dynamik des System ist dabei probabilistisch.
In den Ausführungsformen der Fig. 1 und Fig. 2 wird die oben beschriebene Q-Funktion für jede mögliche Aktion im jeweiligen Zustand des technischen Systems durch ein sog. Feed-Forward-Netz bzw. ein Mehrschicht-Perzeptron $N_a(s)=Q(s,a)$ beschrieben. Die in den hier beschriebenen Ausführungsformen anzupassende Belohnungsfunktion ist somit nach Gleichung (1) gegeben durch:

$$R(s,a,s') = N_a(s) - \gamma \max_{a'} N_{a'}(s') \qquad (4).$$

Hierbei wird der Max-Operator durch eine geeignete Architektur modelliert, wobei eine derartige Modellierung dem Fachmann hinlänglich bekannt ist. In den nachfolgenden Ausführungsformen wird zur Modellierung der Belohnungsfunktion nach Gleichung (2) der hinlänglich aus dem Stand der Technik bekannte Backpropagation-Algorithmus verwendet, wobei das Optimierungsproblem durch die Minimierung des (quadratischen) Bellman-Residuum über alle l beobachteten Übergänge gelöst wird. l ist somit die Anzahl an Datensätzen in den beobachteten Daten des technischen Systems. Diese Minimierung stellt ein Optimalitätskriterium im Sinne der Ansprüche dar. Mathematisch ist das quadratische Bellman-Residuum durch folgende Gleichung gegeben:

$$L = \sum_{i=1}^{l} L_i^2 + \Omega(\Theta) = \sum_{i=1}^{l} \left(Q(\mathbf{s}_i,a_i) - \gamma V(\mathbf{s}_{i+1}) - r_i\right)^2 + \Omega(\Theta) \qquad (5).$$

Dabei repräsentiert $\Theta$ die Parameter der künstlichen neuronalen Feed-Forward-Netze und umfasst insbesondere die Gewichtsmatrizen zwischen den einzelnen Neuronenschichten in den Feed-Forward-Netzen. $\Omega$ ist ein geeigneter Regularisierungsterm. $r_i$ stellt die beobachtete Belohnung bzw. Bewertung in einem Zustand $s_i$ aus den Datensätzen dar, und $s_{i+1}$ sind unvoreingenommene Schätzer der Erwartungswerte der Zustandsgrößen des Folgezustands. Der Gradient der Fehlerfunktion ist dabei durch folgende Gleichung gegeben:

$$\frac{dL}{d\Theta} = 2\sum_{i=1}^{l} L_i \frac{d}{d\Theta}\left(Q(\mathbf{s}_i,a_i) - \gamma V(\mathbf{s}_{i+1})\right) + \frac{d}{d\Theta}\Omega(\Theta) \qquad (6).$$

Dieser Gradient hängt von der momentanen Q-Funktion und der Wertefunktion des Folgezustands ab. Das oben dargelegte Optimalitätskriterium, gemäß dem das Minimum des quadratischen Bellman-Residuums ermittelt wird, kann ggf. auch ersetzt werden durch ein Optimalitätskriterium, gemäß dem der Fixpunkt der Bellman-Iteration gesucht wird. Dies führt oftmals zu besseren Lösungen. Gemäß der Bellmann-Iteration wird iterativ folgender Ausdruck bis zur Konvergenz von Q minimiert:

$$L = \sum_{i=1}^{l} \left( Q(\mathbf{s}_i, a_i) - \mathbf{y}_i \right)^2 + \Omega(\Theta) \qquad (7).$$

Hierbei gilt:

$$\mathbf{y}_i := r_i + \gamma V(\mathbf{s}_{i+1}) \qquad (8).$$

Der Gradient ist dann gegeben durch folgende Gleichung:

$$\frac{dL}{d\Theta} = 2 \sum_{i=1}^{l} L_i \frac{d}{d\Theta} Q(s_i, a_i) + \frac{d}{d\Theta} \Omega(\Theta) \qquad (9).$$

Durch die Rückersetzung von $\mathbf{y}_i$ erhält man ferner folgendes Gleichungssystem:

$$\sum_{i=1}^{l} \left( Q(\mathbf{s}_i, a_i) - \gamma V(\mathbf{s}_{i+1}) - r_i \right) \frac{d}{d\Theta} Q(\mathbf{s}_i, a_i) + \frac{d}{d\Theta} \Omega(\Theta) = 0 \qquad (10).$$

Die Lösung dieses Gleichungssystems ist dann der Fixpunkt der (regularisierten) Bellman-Iteration. Die beiden oben genannten Gradienten unterscheiden sich nur in ihren Richtungstermen und nicht in ihrem Fehlerterm. Durch eine Blockierung des Gradientenflusses durch den Wertefunktionsanteil des Netzwerk wird somit der zuletzt genannte Gradient erzeugt. Auf diese Weise kann ein weiterer Parameter ρ in dem Optimalitätskriterium eingefügt werden, um zwischen den beiden Optimalitätskriterien gemäß der Minimierung des Bellman-Residuums und des Fixpunkts der Bellman-Iteration zu variieren. Das Optimalitätskriterium kann somit in allgemeiner Weise wie folgt geschrieben werden:

$$\sum_{i=1}^{l} \left( Q(\mathbf{s}_i, a_i) - \gamma V(\mathbf{s}_{i+1}) - r_i \right) \frac{d}{d\Theta} \left( Q(\mathbf{s}_1, a_i) - \rho \gamma V(\mathbf{s}_{i+1}) \right) + \frac{d}{d\Theta} \Omega(\Theta) = 0 \qquad (11).$$

Für ρ = 1 erhält man dann das Optimalitätskriterium gemäß der klassischen Minimalisierung des Bellman-Residuums, wohingegen man für ρ = 0 das Erreichen des Fixpunktes der Bellman-Iteration erhält.
Zusammenfassend wird in der soeben erläuterten Ausführungsform des erfindungsgemäßen Verfahrens eine Q-Funktion durch neuronale Netze modelliert, wobei die Parameter der einzelnen neuronalen Netze durch ein bestärkendes Lernverfahren auf der Basis eines Optimalitätskriteriums bestimmt werden. Diese Vorgehensweise ist nochmals in Fig. 1 wiedergegeben. In Fig. 1 repräsentieren die Kreise jeweils Cluster von Neuronen, welche über Gewichtsmatrizen verbunden sind. Die Cluster R, Q und V' sind die entsprechenden Funktionswerte gemäß den obigen Gleichungen, wobei V' für V(s') steht. Der rechte Zweig der Fig. 1 wird hierbei über den Parameter γ gemäß Gleichung (11) mit dem Cluster R gekoppelt. Ebenso fließt der obige Parameter p, der ebenfalls in Gleichung (11) enthalten ist, als Gradientenflusskontrolle ein.
Zunächst werden für alle möglichen n Aktionen $a_t$ in einem jeweiligen Zustand s des technischen Systems entsprechende neuronale Netze $N_1(s)$, ..., $N_n(s)$ initialisiert, wobei die Netze als Eingangsschicht I jeweils den jeweiligen Zustand und als Ausgangsschicht O die modellierte Q-Funktion $Q_1$, ..., $Q_n$ für die jeweilige Aktion 1, ..., n aufweist.

Zwischen Eingangsschicht I und Ausgangsschicht O befindet sich eine versteckte Schicht H, wobei eine Vielzahl von Zwischenschichten vorgesehen sein können. Zwecks Übersichtlichkeitsgründen ist in Fig. 1 nur eine Schicht dargestellt. Beispielhaft sind für die Parameter der Netze jeweils eine Gewichtsmatrix $A_1$, ..., $A_n$ sowie entsprechende Gewichtsvektoren $w_1$, ..., $w_n$ wiedergegeben.

Für jedes der neuronalen Netzes $N_1(s)$ bis $N_n(s)$ findet sich ein entsprechendes Pendant im rechten Zweig des Diagramms der Fig. 1, wobei die Eingangsgrößen der entsprechenden Pendants der jeweilige Folgezustand s' ist. $Q_1'$, ..., $Q_n'$ entsprechen somit den jeweiligen Qualitätsfunktionen $Q_1'$, ..., $Q_n'$ zum Zeitpunkt s'. Der linke und der rechte Zweig sind über die oben beschriebene Belohnungsfunktion R miteinander verknüpft. Das Verfahren läuft derart ab, dass für einen jeweiligen Zustand s mit zugehöriger Aktion gemäß einem Datensatz dasjenige Feed-Forward-Netz im linken Zweig der Fig. 1 aktiviert wird, welches der dem jeweiligen Zustand zugeordneten Aktion gemäß dem Datensatz entspricht. Die Aktivierung des jeweiligen neuronalen Netzes im linken Teil der Fig. 1 wird durch ein in einem Kreis befindliches x-Symbol wiedergegeben. Für den entsprechenden Folgezustand s' werden im rechten Zweig der Fig. 1 dann mit Kopien der neuronalen Netze vom linken Zweig die entsprechenden V-Funktionen mit Hilfe des Maximum-Operators berechnet.

Bei dem in Fig. 1 gezeigten Verfahren wird die Q-Funktion separat für jede mögliche Aktion $a_t$ durch ein neuronales Netz modelliert. In einer Abwandlung ist es jedoch auch möglich, dass die Q-Funktion über ein einziges neuronales Netz modelliert wird, welches als Eingangsgrößen in der Eingangsschicht neben dem Zustand s auch die Aktion a enthält. In diesem Fall werden im rechten Teil der Fig. 1 jeweils n Kopien des neuronalen Netzes des linken Teils der Fig. 1 erzeugt, wobei jede Kopie in der Eingangsschicht den Folgezustand s' sowie einen möglichen Wert einer Aktion enthält.

Als Ergebnis erhält man nach Durchführung des oben beschriebenen Lernverfahrens gemäß Fig. 1 n gelernte neuronale Netze mit entsprechenden Gewichtsmatrizen bzw. Gewichtsvektoren. Anschließend kann mit diesen gelernten neuronalen Netzen dann eine Optimalsteuerung des technischen Systems dadurch durchgeführt werden, dass für einen momentanen Zustand des Systems für alle n neuronalen Netze $N_1$ bis $N_n$ die Q-Funktion berechnet wird. Die Aktion desjenigen neuronalen Netzes mit dem größten Q-Funktionswert wird dann als nächste Aktion gewählt. Mit dem sich dann ergebenden Folgezustand wird wiederum mit dem gleichen Muster der nächste Zustand nach dem Kriterium ausgewählt, welches neuronale Netz den größten Wert der Q-Funktion aufweist.

Das oben beschriebene Verfahren berücksichtigt nicht die Historie von vergangenen Zuständen, was dazu führt, dass die Funktionsweise nicht garantiert werden kann, falls kein Markov-Entscheidungsprozess vorliegt. In einer zweiten Ausführungsform des erfindungsgemäßen Verfahrens kann diese Historie jedoch mitberücksichtigt werden. Dies geschieht dadurch, dass der Datensatz, der zum Lernen der neuronalen Netze verwendet wird, selbst wiederum aus einem Ursprungsdatensatz erzeugt wurde. Der Ursprungsdatensatz ist hierbei der Datensatz, der in der Ausführungsform der Fig. 1 direkt zum Lernen des bzw. der neuronalen Netze eingeflossen ist. In der zweiten Ausführungsform, welche in Fig. 2 gezeigt ist, wird dieser Ursprungsdatensatz nunmehr zur Modellierung des dynamischen Verhaltens des technischen Systems mit einem rekurrenten neuronalen Netz RNN verwendet, welches eine Eingangsschicht I', eine verstreckte Schicht H' und eine Ausgangsschicht O' umfasst. Dieses neuronale Netz umfasst die internen Zustände $\mathbf{x}_t, \mathbf{z}_t, t \in t - \tau,...,t+1$ sowie die Gewichtsmatrizen F, G, H, J. Die Übergänge zwischen den Zuständen sind hierbei durch folgende Gleichungen definiert:

$$\mathbf{x}_t = \tanh\left(F\mathbf{s}_t + J\mathbf{z}_{t-1}\right) \qquad (9)$$

$$\mathbf{z}_t = Ga_t + H\mathbf{x}_t \qquad (10).$$

Mittels einer Matrix M, welche den internen auf den externen Zustand abbildet, kann der Folgezustand durch Erfüllen folgender Bedingung erreicht werden:

$$\left\|M\mathbf{z}_t - \mathbf{s}_{t+1}\right\|^2 = \min. \qquad (11).$$

Mit bekannten Algorithmen werden gemäß den obigen Gleichungen die Parameter des rekurrenten neuronalen Netzes (d.h. die Gewichtsmatrizen des Netzes) derart bestimmt, dass das rekurrente neuronale Netz sehr gut die beobachteten Datensätze im jeweiligen Zeitpunkt generiert. Das rekurrente neuronale Netz wird dabei wiederum mit einem hinlänglich aus dem Stand der Technik bekannten Back-Propagation-Verfahren gelernt. Die Modellierung des dynamischen Verhaltens mittels des rekurrenten neuronalen Netzes RNN ist dem Fachmann hinlänglich bekannt und wird deshalb nicht im Detail erläutert. Im Unterschied zum Verfahren der Fig. 1 fließen nunmehr die versteckten Zustände $x_t$ bzw. $x_{t+1}$ als Eingangsgrößen in die Eingangsschicht I anstatt der Zustände s bzw. s' ein. Ansonsten entspricht das Lernverfahren der Fig. 2 dem Lernverfahren der Fig. 1, was daraus ersichtlich wird, dass der Teil oberhalb des rekurrenten neuronalen Netzes RNN identisch mit Fig. 1 ist. Es wird deshalb auf eine nochmalige Beschreibung des Lernens der neuronalen Netze $N_1$ bis $N_n$ verzichtet. In dem rekurrenten neuronalen Netz gemäß Fig. 2 fließt ferner noch ein Parameter $\mu$ ein, mit dem die Lernrate des rekurrenten neuronalen Netzes im Vergleich zur Lernrate der einzelnen Feed-Forward-Netze angepasst wird. Darüber hinaus werden Matrizen N verwendet, welche weiter unten noch beschrieben werden.

Die in Fig. 2 gezeigte Architektur ermöglicht es, nur ein rekurrentes neuronales Netz sowohl für die Q-Funktion als auch für die Wertefunktion zu verwenden. Das rekurrente neuronale Netz ist hierbei in der Lage, ein deterministisches dynamisches System beliebig genau zu approximieren, was jedoch für ein stochastisches dynamisches System nicht möglich ist. Dies stellt jedoch keine Beschränkung dar, da die Konstruktion des internen versteckten Zustands als eine Transformation in einen geeigneten Merkmalsraum für das stochastische bestärkende Lernverfahren durch die Feed-Forward-Netze angesehen werden kann. Im deterministischen Fall ist dieser Merkmalsraum identisch mit der exakten Beschreibung aller Information, welche die Zukunft bestimmt, wohingegen im allgemeinen stochastischen Fall der interne Zustand derart generiert werden muss, dass die erwartete Zukunft vorhergesagt wird. Deshalb wird in dem rekurrenten neuronalen Netz aus Fig. 2 ein autonomer Zukunftsanteil verwendet, wenn interne Zustände ohne Beobachtungen aus dem Markov-Prozess vorhergesagt werden. In Fig. 2 sind dies die Zustände $\mathbf{x}_t$ für t > i+1 und es gilt:

$$\mathbf{x}_t = \tanh\left(N\mathbf{z}_{t-1}\right), t > i+1\ .$$

Dies ist ausreichend, da die Markov-Eigenschaft durch das Wissen über die erwarteten zukünftigen Zustände rekonstruiert werden kann. Durch die oben beschriebene rekurrente Architektur gemäß Fig. 2 wird die automatische Rekonstruktion eines zu Grunde liegenden Markov-Prozesses prinzipiell beliebiger Ordnung ermöglicht. Der Anwender des erfindungsgemäßen Verfahrens kann somit mehr Informationen aus den Daten nutzen und muss weniger Experteninformationen zur Verfügung stellen.

Die oben beschriebenen Ausführungsformen gemäß Fig. 1 und Fig. 2 des erfindungsgemäßen Verfahrens wurden anhand aus dem Stand der Technik bekannter Problemstellungen getestet. Insbesondere wurde das Verfahren auf das bekannte Cart-Pole-Problem angewandt, gemäß dem ein Stab auf einem sich in der Ebene bewegenden Wagen möglichst lange balanciert werden soll. Es hat sich hierbei gezeigt, dass das Cart-Pole-Problem mit den gemäß der Erfindung gelernten neuronalen Netzen sehr gut gelöst werden kann. Die besten Ergebnisse wurden hierbei dann erhalten, wenn $\rho = 0$ gewählt wurde. Jedoch wurden auch für $\rho > 0$ gute Ergebnisse erreicht.

Das im Vorangegangenen beschriebene Verfahren bietet einen informationseffizienten Lösungsansatz für allgemeine Optimalsteuerungsprobleme auf beliebigen technischen Gebieten, wobei es möglich ist, mit wenig verfügbaren Datensätzen auch komplexe Steuerungsprobleme zu bewältigen, die sich mit klassischen Verfahren nicht zufriedenstellend lösen lassen.

**Patentansprüche**

**1.** Verfahren zur rechnergestützten Steuerung und/oder Regelung eines technischen Systems, bei dem:

a) das dynamische Verhalten des technischen Systems für mehrere Zeitpunkte (t) jeweils durch einen Zustand $(s_t, x_t)$ des technischen Systems und eine am technischen System durchgeführte Aktion $(a_t)$ charakterisiert wird, wobei eine jeweilige Aktion $(a_t)$ zu einem jeweiligen Zeitpunkt (t) in einen Folgezustand $(s_{t+1}, x_{t+1})$ des technischen Systems zum nächsten Zeitpunkt (t+1) führt;
b) eine Aktionsauswahlregel mit einer Mehrzahl von Datensätzen gelernt wird, wobei jeder Datensatz den Zustand $(s_t, x_t)$ des technischen Systems zu einem jeweiligen Zeitpunkt (t), die in dem Zustand $(s_t, x_t)$ durchgeführte Aktion $(a_t)$ sowie den Folgezustand $(s_{t+1}, x_{t+1})$ umfasst und jedem Datensatz eine Bewertung $(r_i)$ zugeordnet ist, wobei das Lernen der Aktionsauswahlregel folgende Schritte umfasst:

i) Modellieren einer Qualitätsfunktion $(Q(s,a))$ durch ein oder mehrere neuronale Netze $(N_a(s))$ umfassend

die Zustände ($s_t$, $x_t$) und Aktionen ($a_t$) des technischen Systems als Parameter;
ii) Lernen des oder der neuronalen Netze ($N_a(s)$) auf der Basis eines Optimalitätskriteriums, welches von den Bewertungen ($r_i$) der Datensätze und der Qualitätsfunktion ($Q(s,a)$) abhängt;

c) das technische System dadurch geregelt und/oder gesteuert wird, dass die am technischen System durchzuführenden Aktionen ($a_t$) mit der gelernten Aktionsauswahlregel basierend auf dem oder den gelernten neuronalen Netzen ($N_a(s)$) ausgewählt werden.

2. Verfahren nach Anspruch 1, bei dem die Qualitätsfunktion ($Q(s,a)$) durch das oder die neuronalen Netze ($N_a(s)$) derart modelliert wird, dass eine Bewertungsfunktion ($R(s,a,s')$) an die Bewertungen ($r_i$) der Datensätze angepasst wird.

3. Verfahren nach Anspruch 1 oder 2, bei dem in Schritt c) diejenige Aktion ($a_t$) in einem jeweiligen Zustand ($s_t$, $x_t$) ausgewählt wird, für welche durch das oder die neuronalen Netze($N_a(s)$) der höchste Wert der Qualitätsfunktion ($Q(s,a)$) erzeugt wird.

4. Verfahren nach einem der vorhergehenden Ansprüche, bei dem die Qualitätsfunktion ($Q(s,a)$) mit einer Mehrzahl von neuronalen Netzen ($N_a(s)$) modelliert wird, wobei jedes Netz der Mehrzahl von neuronalen Netzen ($N_a(s)$) ein Feed-Forward-Netz bildet mit einer Eingangsschicht (I) umfassend einen jeweiligen Zustand ($s_t$, $x_t$) des technischen Systems, einer oder mehreren versteckten Schichten (H) sowie einer Ausgangsschicht (O) umfassend die Qualitätsfunktion ($Q(s,a)$), wobei jedes neuronale Netz ($N_a(s)$) eine in dem jeweiligen Zustand ($s_t$, $x_t$) mögliche durchzuführende Aktion ($a_t$) parametrisiert.

5. Verfahren nach einem der Ansprüche 1 bis 3, bei dem die Qualitätsfunktion ($Q(s,a)$) durch ein einziges neuronales Netz modelliert wird, wobei das neuronale Netz ein Feed-Forward-Netz bildet mit einer Eingangsschicht (I) umfassend einen jeweiligen Zustand ($s_t$, $x_t$) des technischen Systems und die in dem jeweiligen Zustand ($s_t$, $x_t$) durchführbare Aktion ($a_t$), einer oder mehreren versteckten Schichten (H) sowie einer Ausgangsschicht (O) umfassend die Qualitätsfunktion ($Q(s,a)$).

6. Verfahren nach einem der vorhergehenden Ansprüche, bei dem ein Backpropagation-Verfahren zum Lernen des oder der neuronalen Netze ($N_a(s)$) verwendet wird.

7. Verfahren nach einem der vorhergehenden Ansprüche, bei dem das Optimalitätskriterium derart gewählt ist, dass ein optimales dynamisches Verhalten des technischen Systems parametrisiert wird.

8. Verfahren nach einem der vorhergehenden Ansprüche, bei dem das Optimalitätskriterium die Minimierung des Bellmann-Residuums ist.

9. Verfahren nach einem der vorhergehenden Ansprüche, bei dem das Optimalitätskriterium das Erreichen des Fixpunktes der Bellmann-Iteration ist.

10. Verfahren nach einem der vorhergehenden Ansprüche, bei dem das Optimalitätskriterium einen einstellbaren Parameter (p) umfasst, durch dessen Veränderung das Optimalitätskriterium angepasst wird.

11. Verfahren nach einem der vorhergehenden Ansprüche, bei dem ein Zustand ($s_t$, $x_t$) des technischen Systems ein oder mehrere Variablen, insbesondere beobachtete Zustandsgrößen des technischen Systems, umfasst und/oder eine am technischen System durchzuführende Aktion ($a_t$) ein oder mehrere Aktionsvariablen umfasst.

12. Verfahren nach einem der vorhergehenden Ansprüche, bei dem die Zustände ($s_t$, $x_t$) in den Datensätzen versteckte Zustände ($x_t$) des technischen Systems sind, welche durch ein rekurrentes neuronales Netz (RNN) mit Hilfe von Ursprungsdatensätzen generiert werden, wobei die Ursprungsdatensätze jeweils einen beobachteten Zustand ($s_t$) des technischen Systems, eine in dem beobachteten Zustand ($s_t$) durchgeführte Aktion ($a_t$) sowie den daraus resultierenden Folgezustand ($s_t+1$) umfassen.

13. Verfahren nach Anspruch 12, bei dem durch das rekurrente neuronale Netz (RNN) das dynamische Verhalten des technischen Systems modelliert wird, wobei das rekurrente neuronale Netz (RNN) gebildet ist durch wenigstens eine Eingangsschicht (I') umfassend die beobachteten Zustände ($s_t$) des technischen Systems und die am technischen System durchgeführten Aktionen ($a_t$), wenigstens eine versteckte rekurrente Schicht (H) umfassend die

versteckten Zustände ($x_t$) und wenigstens eine Ausgangsschicht (O') umfassend die beobachteten Zustände ($s_t$) des technischen Systems.

14. Verfahren nach Anspruch 13, bei dem das rekurrente neuronale Netz (RNN) mit einem Lernverfahren gelernt wird.

15. Verfahren nach einem der vorhergehenden Ansprüche, bei dem das technische System eine Turbine ist.

16. Verfahren nach Anspruch 15, bei dem mit dem Verfahren eine Gasturbine geregelt und/oder gesteuert wird, wobei die Zustände ($s_t$, $x_t$) des technischen Systems und/oder die in den jeweiligen Zuständen ($s_t$, $x_t$) durchführbaren Aktionen ($a_t$) eine oder mehrere der folgenden Größen umfassen:

Gesamtleistung der Gasturbine; ein oder mehrere Drucke und/oder Temperaturen in der Gasturbine oder in der Umgebung der Gasturbine; Brennkammerbeschleunigungen in der Gasturbine; ein oder mehrere Einstellparameter an der Gasturbine, insbesondere Ventileinstellungen und/oder Kraftstoffverhältnisse und/oder Vorleitschaufelstellungen.

17. Computerprogrammprodukt mit einem auf einem maschinenlesbaren Träger gespeicherten Programmcode zur Durchführung des Verfahrens nach einem der vorhergehenden Ansprüche, wenn das Programm auf einem Rechner abläuft.

**Claims**

1. Method for computer-aided control and/or regulation of a technical system in which:

a) the dynamic behaviour of the technical system is **characterised in** each case for a number of times (t) by a state ($s_t$, $x_t$) of the technical system and an action executed on the technical system ($a_t$), with a respective action ($a_t$) at a respective time (t) leading to a follow-up state ($s_{t+1}$, $x_{t+1}$) of the technical system at the next time (t+1) ;
b) an action selection rule with a plurality of datasets is learnt, with each dataset comprising the state ($s_t$, $x_t$) of the technical system at a respective time (t), the action ($a_t$) executed in the state ($s_t$, $x_t$) and also the follow-up state ($s_{t+1}$, $x_{t+1}$ and each dataset being assigned an evaluation ($r_i$) with the learning of the action selection rule comprising the following steps:

i) Modelling of a quality function (Q(s,a)) by one or more neural networks ($N_a(s)$) comprising the states ($s_t$, $x_t$) and actions ($a_t$) of the technical system as parameters;
ii) Learning of the neural network or networks ($N_a(s)$) on the basis of an optimality criterion that depends on the evaluations ($r_i$) of the datasets and the quality function (Q(s,a));

c) The technical system is regulated and/or controlled by the actions ($a_t$) to be carried out on the technical system being selected with the learnt action selection rule based on the learnt neural network or networks ($N_a(s)$).

2. Method according to claim 1, in which the quality function (Q(s,a)) is modelled by the neural network or networks ($N_a(s)$) such that an evaluation function (R(s,a,s')) is adapted to the evaluations ($r_i$) of the datasets.

3. Method according to claim 1 or 2, in which in step c) that action ($a_t$) is selected in a respective state ($s_t$, $x_t$) for which the highest value of the quality function (Q(s,a)) is created by the neural network or networks ($N_a(s)$).

4. Method according to one the previous claims, in which the quality function (Q(s,a)) is modelled with a plurality of neural networks ($N_a(s)$), with each network of the plurality of neural networks ($N_a(s)$) forming a feed-forward network with an input layer (I) comprising a respective state ($s_t$, $x_t$) of the technical system, one or more hidden layers (H) and also an output layer (O) comprising the quality function (Q(s,a)), with each neural network ($N_a(s)$) parameterising a possible action ($a_t$) to be carried out in the respective state ($s_t$, $x_t$).

5. Method according to one of claims 1 to 3, in which the quality function (Q(s,a)) is modelled by a single neural network, with the neural network forming a feed-forward network with an input layer (I) comprising a respective state ($s_t$, $x_t$) of the technical system and the action ($a_t$) able to be executed in the respective state ($s_t$, $x_t$), one or more hidden layers (H) and also an output layer (O) comprising the quality function (Q(s,a)).

**6.** Method according to one of the previous claims, in which a back-propagation method is used for learning of the neural network or networks ($N_a(s)$).

**7.** Method according to one of the previous claims, in which the optimality criterion is selected such that an optimum dynamic behaviour of the technical system is parameterised.

**8.** Method according to one of the previous claims, in which the optimality criterion is the minimisation of the Bellmann residuum.

**9.** Method according to one of the previous claims, in which the optimality criterion is reaching the checkpoint of the Bellmann iteration.

**10.** Method according to one of the previous claims, in which the optimality criterion comprises a settable parameter (p), through the modification of which the optimality criterion is adapted.

**11.** Method according to one of the previous claims, in which a state ($s_t$, $x_t$) of the technical system comprises one or more variables, especially observed state variables of the technical system, and/or an action to be carried out on the technical system ($a_t$) comprises one or more action variables.

**12.** Method according to one of the previous claims, in which the states ($s_t$, $x_t$) in the datasets are hidden states ($x_t$) of the technical system that are generated by a recurrent neural network (RNN) with the aid of source datasets, with the source datasets each being an observed state ($s_t$) of the technical system, an action ($a_t$) carried out in the observed state ($s_t$) and also the follow-up state ($s_{t+1}$) resulting from said action.

**13.** Method according to claim 12, in which the dynamic behaviour of the technical system is modelled by the recurrent neural network (RNN), with the recurrent neural network (RNN) being formed by at least one input layer (I') comprising the observed states ($s_t$) of the technical system and the actions ($a_t$) executed on the technical system, at least one hidden recurrent layer (H) comprising the hidden states ($x_t$) and at least one output layer (O') comprising the observed states ($s_t$) of the technical system.

**14.** Method according to claim 13, in which the recurrent neural network (RNN) is learnt with a learning method.

**15.** Method according to one of the previous claims in which the technical system is a turbine.

**16.** Method according to claim 15, in which a gas turbine is regulated and/or controlled with the method, with the states ($s_t$, $x_t$) of the technical system and/or the actions ($a_t$) to be performed in the respective states ($s_t$, $x_t$) including one or more of the following variables: Overall power of the gas turbine; one or more pressures and/or temperatures in the gas turbine or in the vicinity of the gas turbine; combustion chamber accelerations in the gas turbine; one or more setting parameters at the gas turbine, especially valve settings and/or fuel ratios and/or inlet guide vane positions.

**17.** Computer program product with program code stored on a machine-readable medium for executing the method according to one of the previous claims when the program runs on a computer.

**Revendications**

**1.** Procédé de commande et/ou de réglage d'un système technique assistés par ordinateur, dans lequel :

a) le comportement dynamique du système technique est caractérisé, pour plusieurs instants (t), respectivement par un état ($s_t$, $x_t$) du système technique et une action ($a_t$) exécutée sur le système technique, une action respective ($a_t$) à un instant respectif (t) menant à un état subséquent ($s_{t+1}$, $x_{t+1}$) du système technique à l'instant suivant (t+1) ;

b) une règle de sélection d'actions avec une pluralité de jeux de données est apprise, chaque jeu de données comprenant l'état ($s_t$, $x_t$) du système technique à un instant respectif (t), l'action ($a_t$) effectuée dans l'état ($s_t$, $x_t$) ainsi que l'état subséquent ($s_{t+1}$, $x_{t+1}$) , et une évaluation ($r_i$) étant affectée à chaque jeu de données, l'apprentissage de la règle de sélection d'actions comprenant les étapes suivantes :

i) modélisation d'une fonction de qualité (Q(s,a)) par un ou plusieurs réseaux neuronaux (N$_a$(s)) comprenant les états (s$_t$, x$_t$) et les actions (a$_t$) du système technique en tant que paramètres ;
ii) apprentissage du ou des réseaux neuronaux (N$_a$(s)) sur la base d'un critère d'optimalité qui dépend des évaluations (r$_i$) des jeux de données et de la fonction de qualité (Q(s,a)) ;

c) le système technique est réglé et/ou commandé par le fait que les actions (a$_t$) à exécuter sur le système technique sont sélectionnées à l'aide de la règle de sélection d'actions qui a été apprise et sur la base du ou des réseaux neuronaux (N$_a$(s)) appris.

2. Procédé selon la revendication 1, dans lequel la fonction de qualité (Q(s,a)) est modélisée de manière telle, par le ou les réseaux neuronaux (N$_a$(s)), qu'une fonction d'évaluation (R(s,a,s')) est adaptée aux évaluations (r$_i$) des jeux de données.

3. Procédé selon la revendication 1 ou 2, dans lequel est sélectionnée, à l'étape c), l'action (a$_t$) dans un état respectif (s$_t$, x$_t$) pour laquelle est générée, par le ou les réseaux neuronaux (N$_a$(s)), la valeur maximale de la fonction de qualité (Q(s,a)).

4. Procédé selon l'une des revendications précédentes, dans lequel la fonction de qualité (Q(s,a)) est modélisée avec une pluralité de réseaux neuronaux (N$_a$(s)), chaque réseau de la pluralité de réseaux neuronaux (N$_a$(s)) constituant un réseau feed forward avec une couche d'entrée (I), qui comprend un état respectif (s$_t$, x$_t$) du système technique, et avec une ou plusieurs couches cachées (H) ainsi qu'une couche de sortie (O) qui comprend la fonction de qualité (Q(s,a)), chaque réseau neuronal (N$_a$(s)) paramétrant une action (a$_t$) possible à exécuter dans l'état respectif (s$_t$, x$_t$) .

5. Procédé selon l'une des revendications 1 à 3, dans lequel la fonction de qualité (Q(s,a)) est modélisée par un unique réseau neuronal, le réseau neuronal constituant un réseau feed forward avec une couche d'entrée (I), qui comprend un état respectif (s$_t$, x$_t$) du système technique et l'action (a$_t$) exécutable dans l'état respectif (s$_t$, x$_t$), et avec une ou plusieurs couches cachées (H) ainsi qu'une couche de sortie (O) qui comprend la fonction de qualité (Q(s,a)).

6. Procédé selon l'une des revendications précédentes, dans lequel est utilisé un procédé de rétropropagation pour l'apprentissage du ou des réseaux neuronaux (N$_a$(s)).

7. Procédé selon l'une des revendications précédentes, dans lequel le critère d'optimalité est choisi de manière telle qu'un procédé dynamique optimal du système technique est paramétré.

8. Procédé selon l'une des revendications précédentes, dans lequel le critère d'optimalité est la minimisation du résidu de Bellman.

9. Procédé selon l'une des revendications précédentes, dans lequel le critère d'optimalité est l'obtention du point fixe de l'itération de Bellman.

10. Procédé selon l'une des revendications précédentes, dans lequel le critère d'optimalité comprend un paramètre réglable (p) par la modification duquel le critère d'optimalité est adapté.

11. Procédé selon l'une des revendications précédentes, dans lequel un état (s$_t$, x$_t$) du système technique comprend une ou plusieurs variables, et plus particulièrement des grandeurs d'état observées du système technique, et/ou une action (a$_t$) exécutable sur le système technique comprend une ou plusieurs variables d'action.

12. Procédé selon l'une des revendications précédentes, dans lequel les états (s$_t$, x$_t$) sont des états (x$_t$) du système technique cachés dans les jeux de données et générés par un réseau neuronal récurrent (RNN) à l'aide de jeux de données initiales, les jeux de données initiales comprenant chacun un état observé (s$_t$) du système technique, une action (a$_t$) exécutée dans l'état observé (s$_t$) ainsi que l'état subséquent (s$_{t+1}$) qui en résulte.

13. Procédé selon la revendication 12, dans lequel le comportement dynamique du système technique est modélisé par le réseau neuronal récurrent (RNN), le réseau neuronal récurrent (RNN) étant formé par au moins une couche d'entrée (I') qui comprend les états observés (s$_t$) du système technique et les actions (a$_t$) exécutées sur le système technique, au moins une couche récurrente cachée (H) qui comprend les états cachés (x$_t$) et au moins une couche de sortie (O') qui comprend les états observés (s$_t$) du système technique.

**14.** Procédé selon la revendication 13, dans lequel le réseau neuronal récurrent (RNN) est appris au moyen d'un procédé d'apprentissage.

**15.** Procédé selon l'une des revendications précédentes, dans lequel le système technique est une turbine.

**16.** Procédé selon la revendication 15, dans lequel une turbine à gaz est réglée et/ou commandée par le procédé, les états $(s_t, x_t)$ du système technique et/ou les actions $(a_t)$ exécutables dans les états respectifs $(s_t, x_t)$ comprenant une ou plusieurs des grandeurs suivantes :

puissance totale de la turbine à gaz ; une ou plusieurs pressions et/ou températures dans la turbine à gaz ou dans l'environnement de la turbine à gaz ; accélérations de chambre de combustion dans la turbine à gaz ; un ou plusieurs paramètres de réglage au niveau de la turbine à gaz, et plus particulièrement des réglages de soupapes et/ou des conditions de carburants et/ou des positions d'aubes directrices amont.

**17.** Produit de programme informatique avec un code de programme stocké sur un support lisible par machine pour exécuter le procédé selon l'une des revendications précédentes lorsque le programme tourne sur un ordinateur.

# FIG 1

# FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **G. SCOTT et al.** Refining PID Controllers Using Neural Networks. *Neural Computation,* 1992, 746-757
- Artificial intelligence for the modeling and control of combustion processes: a review. **KALOGIROU S. A.** Progress in Energy and Combustion Science. Elsevier Science Publishers, 01. Januar 2003, vol. 29, 515-566
- **KUMPATI S. NARENDRA et al.** Adaptive Control Using Multiple Models. *IEEE Transactions on Automatic Control,* 01. Februar 1997, vol. 42